# EUROPEAN PATENT APPLICATION

(11) **EP 4 678 683 A1**
(43) Date of publication of application: **14.01.2026**
(21) Application number: 25160120.9
(22) Date of filing: 25.02.2025
(51) Int. Cl.: C08J 3/075, A23B 2/00, C08F 22/02, C08L 33/02

(54) **SUPERABSORBENT POLYMER, METHOD OF MAKING THE SAME, AND FOODSTUFF PACKAGING MATERIAL INCLUDING THE SAME**

(30) Priority: 12.07.2024 TW 113126187
(71) Applicant: Formosa Plastics Corporation, Kaohsiung City (TW)
(72) Inventor: CHEN, Zhong-Yi, Kaohsiung City (TW); LAI, Tai-Hong, Kaohsiung City (TW)
(74) Representative: Lang, Christian

(57) **Abstract**

The present invention is related to superabsorbent polymer, a method of making the same, and a foodstuff packaging material including the same. The superabsorbent polymer includes a saturated organic acid and maintains excellent absorptive capacity and retention capability. Since the superabsorbent polymer has a high level of polymerization and stability after a polymerization of the aforementioned making method, the superabsorbent polymer has an antibacterial property and a low amount of extractives with low molecular weights. Hence, the superabsorbent polymer can be used as foodstuff packaging material.

## Description

### BACKGROUND

### Field of Invention

The present invention is related to a superabsorbent polymer. More especially, the present invention is related to a superabsorbent polymer obtained by a saturated organic acid, a method of making the same, and a foodstuff packaging material including the same.

### Description of Related Art

Commercial food, especially fresh food, is often packed with foodstuff packaging material to prevent the food from air, water, and being stinky. Fresh food contains high moisture content. For example, fresh meat can have a moisture content (including tissue fluid) of 10 weight percent and thus supports the growth of microbes in the environment inside the packaging, thereby affecting food preservation adversely. The conventional method to solve the aforementioned problem is to use multi-layer cellulose as water absorbent to absorb the water leaked from the food. However, there are limitations on the absorptive capacity and the retention capability of the multi-layer cellulose, and thus the multi-layer cellulose may become a substrate that supports the growth of microbe instead.

A superabsorbent polymer is a polymer material that can absorb and retain moisture 10 times to 100 times and even 1000 times its original mass, thereby being widely used in various industries. Besides being applied in personal hygiene products (e.g., baby diapers, sanitary products, disposable wipes, etc.), the superabsorbent polymer also can be applied as a water-retaining agent in agriculture or horticulture, an anti-dew condensation agent in building material, a water remover in oil industry, as well as a waterproof covering agent in the cable manufacturing industry. The superabsorbent polymer also has the potential to be applied as foodstuff packaging material. However, the superabsorbent polymer is often made by polymerization, and during the manufacturing process, the extractable contents (such as extractives with low molecular weights) can be easily produced. When the superabsorbent polymer attaches to the food, the extractives with low molecular weights may migrate to food and enter the human body through ingestion, thereby raising food safety concerns.

In China publication patent application CN 110820069A, citric acid is used in the mentioned bacteriostatic absorbent pad to improve hydrophobicity and absorptive capacity, and the bacteriostatic absorbent pad carries clove oil with an electrostatic spinning technology to possess an antibacterial property. However, the absorptive capacity of the bacteriostatic absorbent pad is not good enough to meet the needs. Moreover, the polyvinyl alcohol is a polymer and thus raises concerns about the production of extractable contents with low molecular weights.

In China publication patent application CN 114097866A, the mentioned absorbent pad includes a complex membrane of ginger oil and a superabsorbent polymer. In the U.S. Pat. No. US 7595428B, the mentioned absorbent polymer includes a plant cellulose powder and a superabsorbent polymer. In China Pat. No. CN 201980578U, the main material included in the mentioned absorbent pad is an absorber of a superabsorbent polymer. The aforementioned absorbent pad and the superabsorbent polymer include superabsorbent polymers and have excellent absorptive capacity. However, it raises food safety concerns about the production of extractives with low molecular weights.

In the U.S. Pat. No. US 6350710B, the absorbent insert for the mentioned foodstuff packaging includes an absorbing agent polymer made by a special crosslinking agent and thus has excellent absorptive capacity. Moreover, as proven by experimental results, the absorbing agent polymer has a low amount of extractable contents. However, it is not proven whether the absorbing agent polymer has a low amount of extractives with low molecular weights.

In view of these, it is necessary to have a superabsorbent polymer to solve the aforementioned problems.

### SUMMARY

Therefore, an aspect of the present invention is to provide a superabsorbent polymer. As including a saturated organic acid, the superabsorbent polymer not only maintains excellent absorptive capacity and retention capability, but also has an antibacterial property, a low extractable, and a low residual level of the extractives with low molecular weights.

Another aspect of the present invention is to provide a making method of the superabsorbent polymer. In the making method, a saturated organic acid is used to stabilize the chemical structure in the process of the polymerization. Therefore, the obtained superabsorbent polymer has low amounts of extractable contents, a low extractable and a low residual level of the extractives with low molecular weights.

The other aspect of the present invention is to provide a foodstuff packaging material including the aforementioned superabsorbent polymer. The foodstuff packaging material has an antibacterial property, a low amount of extractable contents, a low extractable, and a low residual level of the extractives with low molecular weights. Therefore, the foodstuff packaging material can comply with rules related to food safety.

According to the abovementioned aspect of the present invention, a superabsorbent polymer is provided. The superabsorbent polymer includes a water solution containing carboxyl group monomers, a saturated organic acid, a crosslinking agent, and a polymerization initiator. A neutralization ratio of the water solution containing the carboxyl group monomers is bigger than or equal to 45 mole percent, and pH is smaller than 7.0. The aforementioned saturated organic acid has any one of the hydroxyl group and the halogen atom as well as at least two carboxylic acid group. The aforementioned polymerization initiator includes a thermal decomposition initiator and/or a redox initiator.

According to an embodiment of the present invention, the saturated organic acid includes a structure as shown in formula (1),

HOOC-R-COOH (1);

in which R has a structure as shown in formula (2) or formula (3), 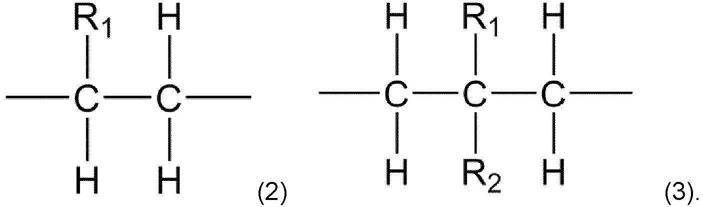 In the aforementioned embodiment, R1 represents a hydroxyl group or a halogen atom and R2 represents a carboxyl group.

According to an embodiment of the present invention, the saturated organic acid includes malic acid, 2-chlorobutanedioic acid, 2-bromobutanedioic acid, citric acid, 2-chloropropane-1,2,3-tricarboxylic acid, 2-bromopropane-1,2,3-tricarboxylic acid, and/or 2-fluoropropane-1,2,3-tricarboxylic acid.

According to an embodiment of the present invention, a use amount of the saturated organic acid is 0.001 weight percent to 5.000 weight percent.

According to another aspect of the present invention, a method of making the superabsorbent polymer is provided. First, a basic compound is used to perform a neutralizing step, so that a neutralization ratio of the water solution containing the carboxyl group monomers is bigger than or equal to 45 mole percent. The pH of the water solution containing the carboxyl group monomers is smaller than 7.0. Then, the water solution containing the carboxyl group monomers, a saturated organic acid, a crosslinking agent, and a polymerization initiator are mixed to perform a free radical polymerization, so as to obtain a superabsorbent polymer.

According to an embodiment of the present invention, a saturated organic acid includes a structure as shown in formula (1),

HOOC-R-COOH (1);

in which R has structures as shown in formula (2) or formula (3), 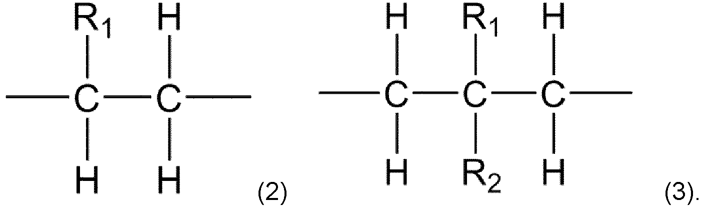 In the aforementioned embodiment, R1 represents hydroxyl group or halogen atom, and R2 represent a carboxyl group.

According to an embodiment of the present invention, the saturated organic acid includes malic acid, 2-chlorobutanedioic acid, 2-bromobutanedioic acid, citric acid, 2-chloropropane-1,2,3-tricarboxylic acid, 2-bromopropane-1,2,3-tricarboxylic acid, and/or 2-fluoropropane-1,2,3-tricarboxylic acid.

According to an embodiment of the present invention, a use amount of the saturated organic acid is 0.001 weight percent to 5.000 weight percent.

According to an embodiment of the present invention, the making method can selectively include a surface crosslinking treatment performing on the superabsorbent polymer.

According to the other aspect of the present invention, a foodstuff packaging material including the aforementioned superabsorbent polymer is provided.

By applying a superabsorbent polymer, a method of making the same, and a foodstuff packaging material including the same of the present invention, in which the superabsorbent polymer is made of saturated organic acid and thus not only maintains excellent absorptive capacity and retention capability but also has a high level of polymerization and stability during the polymerization, resulting in an antibacterial property, a low amount of extractable contents, a low extractable, and a low residual level of the extractives with low molecular weights and can be used as a foodstuff packaging material.

### DETAILED DESCRIPTION

As mentioned above, the present invention provides a superabsorbent polymer, a method of making the same, and a foodstuff packaging material including the same. The superabsorbent polymer includes saturated organic acid and thus not only maintains excellent absorptive capacity and retention capability but also has a high level of polymerization and stability during polymerization. Therefore, the superabsorbent polymer has an antibacterial property, a low amount of extractable contents, a low extractable, and a low residual level of the extractives with low molecular weights. Thus, the superabsorbent polymer can be used as a foodstuff packaging material.

The term "absorptive capacity" herein refers to the ability of the superabsorbent polymer to absorb liquid. In some embodiments, the liquid can include but not limited to pure water, saline, urine, menstrual blood, soil water, or other water solutions applied in the environment. It is worth noting that salt adversely affects the absorptive capacity of the superabsorbent polymer. Therefore, the weights of saline and urine that a superabsorbent polymer can absorb are lesser than that of pure water. Thus, the absorptive capacity of a superabsorbent polymer can be evaluated by using saline to simulate the real situation in that the superabsorbent polymer contacts food while serving as a foodstuff packaging material.

In some embodiments, the absorptive capacity can be evaluated as absorption rate (also referred to as free swell capacity, FSC), which is a ratio value of the maximum weight of liquid absorbed by a superabsorbent polymer without external force (numerator) to the dry weight of the superabsorbent polymer not absorbing the liquid (denominator). In some specific examples, FSC is evaluated by using saline.

The term "retention capability" herein refers to the ability of a superabsorbent polymer to retain water under a force exerted while or after the superabsorbent polymer absorbs water, so as to simulate the real situation that the food places on the foodstuff packaging material and exerts a pressure on the foodstuff packaging material. In some embodiments, the retention capability can be evaluated by absorption against pressure (AAP), which represents the ratio value of the weight of liquid retaining in the superabsorbent polymer after the superabsorbent polymer absorbs the liquid for a while (numerator) over the dry weight of the superabsorbent polymer not absorbing the liquid (denominator). An AAP of greater than or equal to 20 g/g, e.g., 20 g/g to 30 g/g indicates an excellent retention capability of the superabsorbent polymer.

The term "a level of polymerization" herein refers to the ratio of monomers that form a polymer. In some embodiments, a level of polymerization can be evaluated by residual monomer amounts. Residual monomer amounts refer to the amount of unreacted monomers after a free radical polymerization. A lower amount of the residual monomers of a superabsorbent polymer represents a higher level of polymerization of the superabsorbent polymer.

The term "stability" herein refers to the property of a superabsorbent polymer not leaking extractable contents (especially extractives with low molecular weights) due to the stability of the structure of the superabsorbent polymer. In some embodiments, stability can be evaluated by the amount of extractable contents. Under specific pressure an extract solution obtained by saline extraction can be further differentiated as extractives with low molecular weights and other extractives. The weight percentage of the extractives with low molecular weights over the extract solution is the extractable of the extractives with low molecular weights.

In some embodiments, the stability can be evaluated by an extractable and a residual level of the extractives with low molecular weights. The extractable of the extractives with low molecular weights refers to the weight percentage of the extractives with low molecular weights (numerator) account for the obtained extract (denominator). The residual level is the weight percent of the extractives with low molecular weights (numerator) accounting for the superabsorbent polymer (denominator). In some specific examples, the extractives with low molecular weights can be the extractives with molecular weights of smaller than or equal to 1000 g/mol.

The lower the amounts of extractable contents, the extractable, and the residual level of the extractives with low molecular weights are, the higher the stability of the superabsorbent polymer is. That is, as the superabsorbent polymer contacts food, the leakage and migration of extractives with low molecular weights into food can be prevented. Thus, food safety can be ensured by applying the superabsorbent polymer as a foodstuff packaging material.

The term "antibacterial property" herein refers to the property of the superabsorbent polymer to reduce the amount of the microbe having growth activity as contacting the microbe. In some embodiments, the microbe can include but not limited to bacteria, archaea, fungi, and/or protists. In some embodiments, there is no specificity on the antibacterial property of the superabsorbent polymer. That is, the superabsorbent polymer can reduce the amounts of the Gram-positive bacteria and Gram-negative bacteria with growth activities. In the aforementioned embodiment, the Gram-positive bacteria can be Staphylococcus aureus, for example, and the Gram-negative bacteria can be Escherichia coli, for example.

The superabsorbent polymer is obtained by mixing a water solution containing carboxyl group monomers, a saturated organic acid, a crosslinking agent, and a polymerization initiator, followed by a free radical polymerization. The aforementioned water solution containing the carboxyl group monomers can include but not limited to carboxyl group monomers and water, in which the carboxyl group monomers can include but not limited to an acrylic acid composition. In some specific examples, the acrylic acid composition can include but not limited to acrylic acid and/or methacrylic acid.

In some embodiments, the carboxyl group monomers can selectively include other water-soluble monomers with carboxyl groups and unsaturated double bonds. For example, the other water-soluble monomers with carboxyl groups and unsaturated double bonds can include but not limited to maleic acid, fumaric acid, and/or other appropriate water-soluble monomers, or any combination of the aforementioned monomers. **In** other embodiments, the monomer including carboxyl groups can selectively include other hydrophilic monomers having unsaturated double bonds. For example, other hydrophilic monomers having unsaturated double bonds can include but not limited to 2-propenylamine-2-methylpropanesulfonic acid, maleic anhydride, fumaric anhydride, acrylamide, methacrylamide, 2-carboxyethyl acrylate, 2-carboxy ethyl methacrylate, methyl acrylate, ethyl acrylate, dimethyl acrylamide, (acrylamidopropyl)trimethylammonium chloride, other proper hydrophilic monomers, or any other combination of monomers. It is suggested that the amount of other hydrophilic monomers having unsaturated double bonds does not adversely affect the physical properties of the superabsorbent polymer.

In the water solution containing the carboxyl group monomers, the amount of the carboxyl group monomers can be 20 weight percent to 55 weight percent, e.g., 30 weight percent to 45 weight percent, for example. With the amount of the carboxyl group monomers in the aforementioned range, a water solution containing the carboxyl group monomers can be prepared more easily, thereby assisting in the control of the heat of reaction and rate of reaction in the subsequent reaction. Moreover, with the amount of the carboxyl group monomers in the aforementioned range, the obtained superabsorbent polymer can be prepared more easily, and the physical properties of the hydrogel (e.g., viscosity and hardness) can be better, thereby benefiting the mechanical process.

The water solution containing the group monomers can selectively include a water-soluble polymer to reduce the cost. In some embodiments, the water-soluble polymer can include but not limited to partially saponified or fully saponified polyvinyl alcohol, polyethylene glycol, polyacrylic acid, polyacrylamide, cellulose, starch, and/or starch derivatives. In some specific examples, cellulose can include but not limited to methylcellulose, methylcellulose acrylate, ethyl cellulose, other proper cellulose, or a combination of the same. In some embodiments, based on the superabsorbent polymer as 100 weight percent, the use amount of the water-soluble polymer is 0 weight percent to 20 weight percent, e.g., 0 weight percent to 10 weight percent, or 0 weight percent to 10 weight percent, so that the superabsorbent polymer has better physical properties.

The water solution containing the carboxyl group monomers can be subjected to a neutralizing step by using a basic compound, so that a neutralization ratio of the water solution containing the carboxyl group monomers can be bigger than or equal to 45 mole percent, thereby enhancing the absorptive capacity of the obtained superabsorbent polymer. In some embodiments, a basic compound can include but not limited to an alkali metal compound, other suitable basic compounds, or any mixtures of the aforementioned compounds. In some embodiments, the basic compound can include a basic compound having a hydroxyl group, a compound having a carboxyl group, other suitable basic compounds, or any mixtures of the aforementioned compounds. In some specific examples, a basic compound can include but not limited to sodium hydroxide, potassium hydroxide, sodium carbonate, potassium carbonate, sodium bicarbonate, and/or potassium bicarbonate. After the neutralizing step, the partial carboxyl groups in the water solution containing the carboxyl group monomers can form sodium salts or potassium salts.

Based on the amount of the carboxyl group in the water solution containing the carboxyl group monomers before the neutralizing step as 100 mole percent, the neutralization ratio of the water solution containing the carboxyl group monomers (i.e., the amount of the carboxyl group being neutralized in the water solution containing the carboxyl group monomers) can be bigger than or equal to 45 mole percent, e.g., 45 mole percent to 85 mole percent, or 60 mole percent to 80 mole percent, for example. In other words, the higher the neutralization ratio of the water solution containing the carboxyl group monomers is, the lesser the carboxyl group of the water solution containing the carboxyl group monomers has. If the neutralization ratio of the water solution containing the carboxyl group monomers is smaller than 45 mole percent, the obtained superabsorbent polymer has a worse absorptive capacity, a worse retention capability, and a lower pH. In some embodiments, if the neutralization ratio of the water solution containing carboxyl group monomers is in the aforementioned range, the obtained superabsorbent polymer has an antibacterial property, a proper pH, better absorptive capacity, and better retention capability.

**In** some embodiments, the pH of the water solution containing the carboxyl group monomers can be smaller than 7.0, or 5.0 to 6.5, or 5.0 to 6.0, for example. If the pH of the water solution containing the carboxyl group monomers is bigger than or equal to 7.0, the absorptive capacity and the retention capability of the obtained superabsorbent polymer reduce dramatically. In some embodiments, if the pH of the water solution containing the carboxyl group monomers is 5.0 to 6.0, the obtained superabsorbent polymer has better absorptive capacity and retention capability.

The aforementioned saturated organic acid has any one of a hydroxyl group and a halogen atom as well as at least two carboxyl groups. During the free radical polymerization, the hydroxyl group and the halogen atom can form carbocation. The carbocation has a vacant p orbital that can overlap with a carbon-oxygen double bond (π bond) of the adjacent carboxyl groups, thereby forming a resonance structure that can further stabilize the chemical structure forms in the free radical polymerization. Therefore, the rate of reaction of the free radical polymerization can be lower, and the obtained superabsorbent polymer can have a higher level of polymerization, so that the amounts of extractable contents, the extractable as well as the residual level of the extractives with low molecular weights can be lower. Moreover, the saturated organic acid can further lower the pH of the obtained superabsorbent polymer, so that the superabsorbent polymer has an antibacterial property.

In some embodiments, the saturated organic acid can include a structure as shown in formula (1),

HOOC-R-COOH (1)

in the formula (1), R has a structure as shown in formula (2) or formula (3), 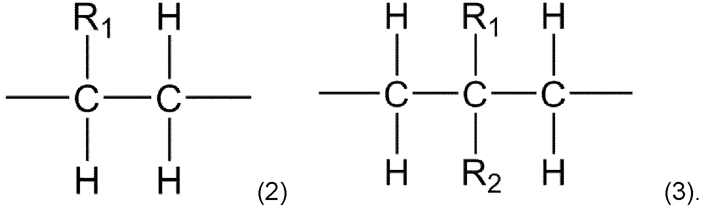 in which R1 represents a hydroxyl group or a halogen atom, and R2 represents a carboxyl group.

In some specific examples, the saturated organic acid can include but not limited to malic acid, 2-chlorobutanedioic acid, 2-bromobutanedioic acid, citric acid, 2-chloropropane-1,2,3-tricarboxylic acid, 2-bromopropane-1,2,3-tricarboxylic acid, and/or 2-fluoropropane-1,2,3-tricarboxylic acid. In some embodiments, based on the superabsorbent polymer as 100 weight percent, a use amount of the saturated organic acid can be 0.001 weight percent to 5.000 weight percent, for example, so as to stabilize the chemical structure of the free radical polymerization as well as maintain a better rate of manufacture.

It is worth noting that the saturated organic acid needs to be added before the carboxyl group monomers subjected to the free radical polymerization. If the saturated organic acid is added after the carboxyl group monomers subject to the free radical polymerization and form a polymer, the saturated organic acid cannot stabilize the chemical structure of the carboxyl group monomers during the radical polymerization, and the amounts of extractable contents, the extractable and the residual level of the extractives with low molecular weights cannot be effectively reduced.

During the process of free radical polymerization, the crosslinking agent can provide the obtained superabsorbent polymer with a proper crosslinking degree and proper processability, thereby forming a hydrogel. The crosslinking agent can include but not limited to a compound with at least two unsaturated double bond groups, a compound with at least two epoxy groups, other suitable crosslinking agents, or any mixtures of the aforementioned compounds. In some specific examples, the compound with at least two unsaturated double bond groups can include but not limited to N,N'-bis(2-propenyl) amine, N,N'-methylene-bis(acrylamide), N,N'-methylene-bis(methacrylamide), allyl acrylate, ethylene glycol diacrylate, polyethylene glycol diacrylate, ethylene glycol dimethacrylate, poly ethylene glycol dimethacrylate, glycerol triacrylate, glycerol trimethacrylate, glycerol ethylene oxide triacrylate, glycerol ethylene oxide trimethacrylate, trimethylolpropane ethylene oxide triacrylate, trimethylolpropane ethylene oxide trimethacrylate, trimethylolpropane trimethacrylate, trimethylolpropane triacrylate, N,N,N-tris(2-propenyl)amine, ethyleneglycol diacrylate, polyoxyethylene triacrylate glycerol esters, triethylene polyoxyethylene glycerol triacrylate, and/or dipropylene triethylene glycol esters. In some specific embodiments, the compound with at least two unsaturated epoxy groups can include but not limited to sorbitol polyglycidyl ether, polypropylene glycol polyglycidyl ether, ethylene glycol diglycidyl ether, diethylene glycol diglycidyl alcohol ether, polyethylene glycol diglycidyl ether, and/or dipropylene glycol polyglycidyl ether.

Based on the use amount of the solid content of the superabsorbent polymer as 100 parts by weight, the use amount of the crosslinking agent can be 0.001 parts by weight to 5 parts by weight, e.g., 0.01 parts by weight to 3 parts by weight, for example. If the use amount of the crosslinking agent is in the aforementioned range, the formed hydrogel has a better mechanical property and can therefore benefit processing. Moreover, the obtained superabsorbent polymer has better absorptive capacity and retention capability.

The polymerization initiator can decompose and generate free radicals, so as to initiate the aforementioned free radical polymerization reaction, thereby forming the superabsorbent polymer in hydrogel form. The polymerization initiator of the present invention can include but not limited to a thermal decomposition initiator, a redox initiator, other suitable polymerization initiator, or any mixtures of the aforementioned materials. In some specific examples, the redox initiator can include an acidic sulfite salt, a thiosulfate salt, ascorbic acid, or a ferrous salt. In some specific examples, the thermal decomposition initiator can include hydrogen peroxide, di-t-butyl peroxide, a peroxyamide, a persulfate (such as ammonium salt, alkali metal salt), and/or azo compound (e.g., 2,2'-azobis (2-amidinopropane) dihydrochloride salt, 2.2'-azobis (N,N-dimethyleneisobutylamidine) dihydrochloride salt).

When the polymerization initiator includes the thermal decomposition initiator and the redox initiator at the same time, the redox initiator can decompose and generate free radicals, thereby initiating the first stage of the free radical polymerization reaction. At the same time, the reaction heat generated in the first stage of the free radical polymerization reaction can make the thermal decomposition initiator decompose, thereby increasing the reactivity of the free radical polymerization reaction..

Based on the carboxyl group monomers being neutralized as 100 weight percent, the use amount of the polymerization initiator can be 0.001 weight percent to 10 weight percent, e.g., 0.1 weight percent to 5 weight percent, for example. If the use amount of the polymerization initiator is in the aforementioned range, the free radical polymerization can have a proper reactivity, so the obtained superabsorbent polymer has a proper level of polymerization and forms a hydrogel.

It is noted that the aforementioned free radical polymerization can be performed in a batch reactor or a conveyor belt reactor. Moreover, the superabsorbent polymer obtained by the aforementioned making method is in the form of hydrogel and can further form hydrogel pieces by performing a pulverizing step. In some embodiments, the pulverizing step can be performed with a cutting mill. The diameters of the hydrogel pieces can be smaller than or equal to 2.0 mm, or 0.03 mm to 1.5 mm, for example. When the diameters are in the aforementioned range, the hydrogel pieces have better thermal conductivity properties and higher amounts of fine powders. Thus, it is beneficial to remove residual monomers and water content. Moreover, it can prevent the cost of the subsequent processing increases. It is worth noting that the narrower the distributions of the diameters of the hydrogel pieces are, the better the efficiency of the drying step is, and the absorbent properties of the formed dry matter will be better.

In some embodiments, after the free radical polymerization or the pulverizing step, the drying step can be selectively performed on the superabsorbent polymer, so the water and residual monomers in the superabsorbent polymer can be effectively removed, thereby obtaining the dry matter of the superabsorbent polymer. Thus, compared to the superabsorbent polymer not subjected to the drying step, the superabsorbent polymer obtained by the drying step can have a better absorptive capacity. In some embodiments, the temperature of the drying step can be 100°C to 180°C, for example, and the time of the drying step can be 1 hour to 3 hours, so as to control the crosslinking degree of the superabsorbent polymer.

After performing the drying step, the dry matter of the superabsorbent polymer can selectively be pulverized and screened, so as to obtain a powder of the superabsorbent polymer. The diameter of the superabsorbent polymer can be 0.06 mm to 1.00 mm, or 0.10 mm to 0.85 mm, for example, to achieve a better amount of fine powder and absorbent properties.

The obtained superabsorbent polymer made by free radical polymerization reaction has an even crosslinking structure. Moreover, the superabsorbent polymer is an un-dissolved hydrophilic polymer. To further increase the absorptive capacity, the gel strength, the anti-caking property, and the permeability of the liquid of the superabsorbent polymer, a surface crosslinking treatment can be selectively performed on the superabsorbent polymer to further bridge the surface of the superabsorbent polymer.

A surface crosslinking agent used in the surface crosslinking treatment can include but not limited to a multifunctional crosslinking agent that can react to carboxylic acid reaction. In some embodiments, the surface crosslinking agent can include but not limited to a polyol, a polyamine, a compound having at least two epoxy groups, an alkylene carbonate, other suitable crosslinking agents, or any mixtures of the aforementioned materials. In some specific examples, the crosslinking agent can include but not limited to glycerol, ethylene glycol, diethylene glycol, triethylene glycol, polyethylene glycol, propylene glycol, 1,4-butanediol, ethylenediamine, diethylenediamine, triethylenediamine, sorbitol polyglycidyl ether, polypropylene glycol polyglycidyl ether, ethylene glycol diglycidyl ether, diethylene glycol diglycidyl ether, polyethylene glycol diglycidyl ether, dipropylene glycol polyglycidyl ether, ethylene glycol carbonate, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 1,3-dioxan-2-one or 4,6-dimethyl-1,3-dioxan-2-one, and/or 1,3-dioxepan-2-one.

Based on the superabsorbent polymer as 100 parts by weight, the use amount of the surface crosslinking agent can be 0.001 parts by weight to 10 parts by weight, preferably 0.005 parts by weight to 5 parts by weight, for example, so as to reach a proper level of surface treatment and an absorptive capacity.

According to the form of the surface crosslinking agent, the surface crosslinking agent can added to the superabsorbent polymer directly or after being prepared into a crosslinking solution at first. The crosslinking solution can include but not limited to water and/or a hydrophilic organic solvent. In some specific examples, the hydrophilic organic solvent can be methanol, ethanol, propanol, isobutanol, acetone, methyl ether, and/or ethyl ether, for example. In some embodiments, the surface crosslinking treatment can be performed at 100°C to 200°C for 0.5 hours to 1.5 hours, so as to reach a better bridging effect. In some embodiments, after the surface crosslinking treatment, an aluminum sulfate water solution can be selectively added, so as to prevent the superabsorbent polymer from absorbing moisture in the air and caking during processing. In the aforementioned embodiment, the concentration of the aluminum sulfate water solution can be 20 weight volume percentage to 30 weight volume percentage, for example. Moreover, based on the weight of the superabsorbent polymer is 100 parts by weight, the use amount of the aluminum sulfate water solution can be 1.5 g to 3.0 g, for example. In the aforementioned embodiment, after adding the aluminum sulfate water solution, the superabsorbent polymer can selectively be heat-treated at 100°C to 200°C for 0.5 to 1.5 hours.

As proven by experiments, the superabsorbent polymer can have AAP of 20 g/g to 30 g/g, for example, and saline FSC of bigger than 60 g/g, for example, representing an excellent retention capability. Moreover, the amount of the residual monomers of the superabsorbent polymer can be 250 ppm to 400 ppm, for example, indicating an excellent level of polymerization.

As proven by experiments, the amounts of extractable contents of the superabsorbent polymer can be smaller than 10 weight percent, for example. The extractable of the extractives with low molecular weights can be smaller than or equal to 1.5 weight percent, for example. The residual level can be smaller than 0.15 weight percent, and even smaller than 0.10 weight percent, for example, indicating that the superabsorbent polymer has excellent stability during the making process. Moreover, it shows that the superabsorbent polymer has an antibacterial property since the superabsorbent polymer can reduce the amount of the microbe having growth activity after the superabsorbent polymer contacts to microbe.

As mentioned above, the residual level of extractives with low molecular weights of the superabsorbent polymer is extremely low, and thus the superabsorbent polymer can be applied as a foodstuff packaging material. In some embodiments, the superabsorbent polymer can be disposed on a polyethylene membrane directly, and a nonwoven fabric is deposed on the absorbent. In these application examples, the superabsorbent polymer paved between the polyethylene membrane and the nonwoven fabric is not tightly stacked, so there is a space for the superabsorbent polymer to expand, and the superabsorbent polymer can absorb more amount of water.

In some embodiments, the superabsorbent polymer can selectively be mixed with fiber substrates to form an absorber. In some embodiments, the absorber can be deposed on the polyethylene membrane, and the permeable nonwoven fabric is deposed on the absorbent, so as to form a structure with laminar composites.

In some embodiments, the fiber substrates can include a hydrophilic fiber, so as to benefit the diffusion and transmission of liquid, thereby enhancing the absorptive capacity of the absorber. In some specific examples, the hydrophilic fiber can include but not limited to pulverized wood pulp, crosslinked cellulose, cotton, wool, and/or vinyl acetate fiber.

Normally, based on the basis weight (weight of a unit of area) can be 0.01 g/cm2 to 0.30 g/cm2, and the thickness of the absorber is not bigger than 30 mm. In some embodiments, based on the weight of the absorber being 100 weight percent, the weight of the superabsorbent polymer can be smaller than or equal to 20 weight percent, or smaller than or equal to 10 weight percent, for example.

### Preparation Example 1

A neutralizing step was performed by slowly adding 437.5 g sodium hydroxide water solution of 48 weight percent to a 2000 mL Erlenmeyer flask containing 540.0 g acrylic acid and 583.2 g water, so as to obtain an acrylic acid water solution with a monomer concentration of 42 weight percent. In the acrylic acid water solution, 70 mole percent of the acrylic acid formed sodium acrylate. The adding ratio of the sodium hydroxide to the acrylic acid was 0.85 to 0.95, the time of the neutralizing step was 2 hours, and in the process of the neutralizing step, the temperature of the reaction system in the Erlenmeyer flask maintained at 15°C to 40°C.

Next, 15.6 g of citric acid and 0.9 g of N,N'-methylene-bis(acrylamide) were added to the Erlenmeyer flask, and the temperature of the reaction system in the Erlenmeyer flask was maintained at about 20°C. Then, a free radical polymerization was performed by adding 0.3 g of hydrogen peroxide, 3.6 g of ammonium persulfate initiator to the Erlenmeyer flask, so as to obtain a hydrogel of the superabsorbent polymer. The hydrogel was chopped by a cutting mill and screened for hydrogel pieces having particle sizes smaller than or equal to 2.0 mm. Then, a drying step was performed on the hydrogel pieces at 130°C for 2 hours, and screening was performed by using a sifting screen with a sifting screen of 0.10 mm to 0.85 mm, so as to obtain powders of the superabsorbent polymer.

A surface-treated superabsorbent polymer was obtained by mixing 200 g powder or Preparation Example 1 and 5 g surface crosslinking agent solution, followed by a heat treatment at 150°C for 1 hour and a cooling treatment. The aforementioned surface crosslinking agent solution included ethylene glycol, 1,4-butanediol (manufactured by FORMOSA PLASTICS CORPORATION), and methanol which were mixed with a volume ratio of 1:1:0.5.

### Preparation Example 2

The making method of the superabsorbent polymer powder of Preparation Example 2 was similar to that of Preparation Example 1. The difference was that in the making method of Preparation Example 2, the 0.9 g N,N'-methylene-bis(acrylamide) was replaced with 1.1 g polyethylene glycol diacrylate having a molecular weight of 626.

Moreover, 200 g superabsorbent polymer powder of the Preparation Example 2 was mixed with 5 g surface crosslinking agent (including ethylene glycol, 1,4-butanediol, and methanol mixed with a volume ratio of 1.0:1.0:0.5), followed by a heat treatment at 150°C for 1 hour and a cooling treatment. After that, 2.1 g aluminum sulfate water solution of 27.5 weight volume percentage was added, followed by a heat treatment at 150°C for 30 minutes and a cooling treatment, so as to obtain the surface-treated superabsorbent polymer.

### Preparation Examples 3 to 8

The making methods of the surface-treated superabsorbent polymers of the Preparation Examples 3 to 6 were similar to those of Preparation Example 1. The differences were that the use amount of the citric acid in Preparation Example 3 was 23.4 g, and the use amount of the citric acid in Preparation Example 4 was 10.9 g. In Preparation Example 5, the citric acid was replaced with 7.6 g malic acid. In Preparation Example 6, the citric acid was replaced with 12.5 g 2-chlorobutanedioic acid. The making methods of the surface-treated superabsorbent polymers of Preparation Examples 7 and 8 were similar to that of Preparation Example 2. The differences were that the use amount of the citric acid in Preparation Example 7 was 10.9 g, and the use amount of the citric acid in Preparation Example 8 was 23.4 g.

### Comparative Preparation Example 1 to Comparative Preparation Example 3

The making method of the surface-treated superabsorbent polymer in Comparative Preparation Example 1 was the same as that in Preparation Example 1. The difference was that citric acid was not added in Comparative Preparation Example 1. The making method of the surface-treated superabsorbent polymer in the Comparative Preparation Example 2 was the same as that of Preparation Example 2. The difference was that citric acid was not added in Comparative Preparation Example 2. The making method of the surface-treated superabsorbent polymer of the Comparative Preparation Example 3 was the same as that of Comparative Preparation Example 2. The difference was that the surface crosslinking agent in Comparative Preparation Example 3 included ethylene glycol diglycidyl ether (EX810, made by NAGASE & CO., LTD.) mixed with a volume ratio of 1:2:2. Moreover, a heat treatment at 130°C for 30 minutes succeeded after the surface crosslinking agent was added.

### Comparative Preparation Examples 4 and 5

The surface-treated superabsorbent polymers of Comparative Preparation Examples 4 and 5 were commercial superabsorbent polymers (manufactured by FORMOSA PLASTICS CORPORATION), in which the product name of the commercial superabsorbent polymer in Comparative Preparation Example 4 was BC283FHA. The product name of the commercial superabsorbent polymer in Comparative Preparation Example 5 was BC683AN.

### Evaluation method and result

To show the properties of the superabsorbent polymer of the present invention, the physical properties were analyzed with the followed evaluation method. Unless otherwise specified, the evaluation methods were performed at room temperature (e.g. 23±2°C.) and in an environment with relative air humidity of 45±10%. The superabsorbent polymer was uniformly mixed before being evaluated. The absorptive capacity of the superabsorbent polymer can be evaluated by free swell capacity (FSC) in saline, and the retention capability of the surface-treated superabsorbent polymer can be evaluated by absorption against pressure (AAP). The level of polymerization of the surface-treated superabsorbent polymer can be evaluated by the amount of residual monomers (RM), in which RM was also mentioned as residual acrylic acid (RAA). The stability of the surface-treated superabsorbent polymer can be evaluated by the amount of extractable contents, the extractable and the residual level of the extractives with low molecular weights. The evaluation also included evaluating the antibacterial property of the superabsorbent polymer.

### Saline-free swell capacity (FSC)

The saline-free swell capacity of the surface-treated superabsorbent polymer was evaluated according to the measurement method of ERT 441.3(10) regulated by European Disposables and Nonwovens Association (EDANA), which was briefly described herein. The weight of the saline absorbed by the surface-treated superabsorbent polymer was measured after 0.1 g surface-treated superabsorbent polymer was soaked in 400 mL saline of 0.2%(w/w) for 24 hours. Then, the ratio of the weight of the saline absorbed by the surface-treated superabsorbent polymer to the weight of the surface-treated superabsorbent polymer not soaked in saline (i.e., 0.1 g) was calculated to obtain FSC (unit: g/g).

### Absorption against pressure (AAP)

The absorption against the pressure of the surface-treated superabsorbent polymer was evaluated according to the measurement method of ERT 442.3(10) regulated by EDANA, which was briefly described hereafter. The initial weight of the surface-treated superabsorbent polymer was measured, and a pressure of 4.9 kPa was exerted on the surface-treated superabsorbent polymer. Then, the surface-treated superabsorbent polymer was soaked in 0.9 weight percent of sodium chloride aqueous solution for 60 minutes. Then, the weight of the surface-treated superabsorbent polymer after soaking was measured. The absorption against pressure was obtained by dividing the weight after soaking by the initial weight.

### Amount of residual acrylic acid (RAA)

The amount of the residual monomers, or so called the amount of the residual acrylic acid, was evaluated according to the measurement method of ERT 410.3(10) regulated by EDANA.

### Amounts of extractable contents

The amounts of the extractable contents of the surface-treated superabsorbent polymer were measured according to the measurement method of ERT 470.3(10) regulated by EDANA, in which the potentiometric titration was performed with a measuring time prolonged to 24 hours.

### Extractable and residual level of extractives with low molecular weights

The extractable of the extractives with low molecular weights of the surface-treated superabsorbent polymer was evaluated according to §21 177.1211 of the Code of Federal Regulations Title (CFR) regulated by the U.S. Food and Drug Administration (FDA), which was briefly described herein. A tea bag sample was obtained by using a 4 inches×6 inches tea bag to contain the superabsorbent polymer. The tea bag sample was exerted with a pressure of 0.15 pounds per square inch (psi) and soaked in a sodium chloride aqueous solution of 0.2 weight volume percentage, so as to extract the tea bag sample for 24 hours at 20°C. The ratio of the volume of the sodium chloride aqueous solution to the surface-treated superabsorbent polymer in the tea bag sample was at least 60 mL:1 g, so as to obtain an extract solution.

The extract solution was filtered by the No. 1 qualitative filter paper, and 20 mL of the obtained filtrate was placed on a petri dish, followed by a drying step performed at 80°C for 120 minutes, so as to obtain a sample to be tested. 10 mg sample to be tested was added to a 1 mL mobile phase (0.2 M NaNO₃ and 0.01 M Na₂HPO₄), so as to obtain an injection sample. Then, the injection sample was analyzed by gel permeation chromatography, so as to obtain the weight-average molecular weight (Mw), the number-average molecular weight (Mn), and the Z-average molecular weight (Mz) of the sample to be tested. The following calculation for the residual level of the extractives with low molecular weights was performed with the weight-average molecular weight (Mw) of the sample to be tested.

Then, the data analyzing function of the analyze software DataApex Clarity VA was used to calculate the hundred percent of the total area under the curve to the area of the curve smaller than 1000 g/mol, so as to obtain the extractable of the extractives with low molecular weights. Moreover, the residual level of the extractives with low molecular weights of the surface-treated superabsorbent polymer was obtained by calculating the quotient of the product of the molecular weights of the extractives corresponding to the peak of the curve smaller than 1000 g/mol times to the area under the curve smaller than 1000 g/mol (numerator) divided the weight of the superabsorbent polymer (denominator), i.e., obtained by formula (4): the residual level of the extractives with low molecular weights = extractable of the extractives with low molecular weights × molecular weight of extractives × 100%

### Antibacterial property

An antibacterial standard test was performed according to AATCC TM100 regulated by The American Association of Textile Chemists and Colorists (AATCC), so as to evaluate the antibacterial property of the surface-treated superabsorbent polymer to Gram-positive bacteria (*Staphylococcus aureus*) and Gram-negative bacteria (*Escherichia coli*)*.* The method was briefly described herein. A blank test sample was subjected to absorb 1 mL bacterial solution in a wide-mouth bottle, 100 mL neutralized solution was added into the wide-mouth bottle, and the wide-mouth bottle was shaken vigorously (i.e., by an oscillator). The obtained washing-out solution was spread on a comparative petri dish. The bacterial solution included 1×10⁵ colony forming unit (CFU)/mL to 3×10⁵ CFU/mL bacteria (*Staphylococcus aureus* or *Escherichia coli*)*.*

Next, an experimental test sample made by the surface-treated superabsorbent polymer was subjected to absorb the bacterial solution and then placed in a wide-mouth bottle for incubation at 37°C for 24 hours. Then, with the aforementioned method, the washed-out solution was obtained and spread on an experimental petri dish.

The comparative petri dish and the experimental petri dish were placed in an incubator to perform incubation, so as to obtain colonies. The numbers of the colonies on the comparative petri dish and the experimental petri dish were counted, so as to obtain a first bacterial amount of the blank test sample contacting the bacterial solution for 0 hours as well as the second bacterial amount of the experimental test sample contacting the bacterial solution for 24 hours. The hundred percentage of the difference of the first bacterial amount and the second bacterial amount to the second bacterial amount was calculated to obtain a bacterial reduction rate (R-value). According to the R-value, the antibacterial property of the superabsorbent polymer can be divided to 4 grades. Grade 1 represents an R-value of negative or 0%, i.e., the superabsorbent polymer had no antibacterial property. Grade 2 represents an R-value of bigger than 0% to 30%, i.e., the superabsorbent polymer had little antibacterial property. Grade 3 represents an R-value of bigger than 30% to 60%, i.e., the superabsorbent polymer had an antibacterial property. Grade 4 represents an R-value of bigger than 60%, i.e., the superabsorbent polymer had an excellent antibacterial property.

Table 1 lists the types and amounts of saturated organic acid, APP, FSC, RAA, amounts of extractable contents, extractables as well as residual levels of extractives with low molecular weights, and R-values of the obtained surface-treated superabsorbent polymers of Preparation Examples 1 to 8 and Comparative Preparation Examples 1 to 5.

**Table 1**

| Examples | | Saturated organic acid (B) | | Type of crosslinking agent (C) | Saline FSC (g/g) | AAP (g/g) | Amount of RAA (ppm) | Amount of extractable component (%) | Extractives with low molecular weights | | R-value | |
|---|---|---|---|---|---|---|---|---|---|---|---|---|
| | | Type | Amount (g) | | | | | | Extractables (%) | Residual level (%) | Bacteria | |
| | | | | | | | | | | | 1 | 2 |
| Preparation Examples | 1 | B-1 | 15.6 | C-1 | 65.3 | 22.5 | 311 | 7.2 | 0.81 | 0.058 | 4 | 4 |
| | 2 | B-1 | 15.6 | C-2 | 62.1 | 23.7 | 374 | 8.6 | 0.92 | 0.079 | 3 | 3 |
| | 3 | B-1 | 23.4 | C-1 | 66.7 | 21.7 | 296 | 6.7 | 0.79 | 0.053 | 4 | 4 |
| | 4 | B-1 | 10.9 | C-1 | 63.5 | 21.7 | 348 | 8.4 | 0.86 | 0.072 | 3 | 4 |
| | 5 | B-2 | 7.6 | C-1 | 64.2 | 21.5 | 377 | 8.6 | 0.86 | 0.074 | 3 | 3 |
| | 6 | B-3 | 12.5 | C-1 | 62.5 | 21.4 | 394 | 8.7 | 0.83 | 0.072 | 4 | 3 |
| | 7 | B-1 | 10.9 | C-2 | 61.8 | 23.2 | 351 | 9.3 | 0.96 | 0.089 | 3 | 3 |
| | 8 | B-1 | 23.4 | C-2 | 63.6 | 23.8 | 337 | 7.1 | 0.81 | 0.058 | 4 | 4 |
| Comparative Preparation Examples | 1 | Not added | | C-1 | 58.9 | 22.7 | 325 | 15.2 | 2.21 | 0.336 | 1 | 1 |
| | 2 | Not added | | C-2 | 57.2 | 23.9 | 401 | 14.9 | 2.27 | 0.338 | 1 | 1 |
| | 3 | Not added | | C-2 | 55.6 | 21.7 | 433 | 19.1 | 3.27 | 0.625 | 1 | 2 |
| | 4 | Commercial SAP | | | 62.7 | 10.6 | 275 | 28.1 | 4.22 | 1.186 | 4 | 4 |
| | 5 | Commercial SAP | | | 56.2 | 15.7 | 236 | 18.9 | 2.11 | 0.399 | 4 | 4 |
| B-1:citric acid; B-2:malic acid; B-3:2-chlorobutanedioic acid | | | | | | | | | | | | |
| C-1:N,N'-methylene-bis(acrylamide); C-2: polyethylene glycol diacrylate | | | | | | | | | | | | |
| Bacteria 1:*Staphylococcus aureus;* Bacteria *2:Escherichia coli* | | | | | | | | | | | | |

As shown in Table 1, there were little differences between the FSC and the AAP of Preparation Examples 1 to 8 and that of Comparative Preparation Examples 1 to 5, indicating that the surface-treated superabsorbent polymer could maintain excellent absorptive capacity and retention capability with the addition of saturated organic acid. There were little differences between the amount of RAA of Preparation Examples 1 to 8 and that of Comparative Preparation Examples 1 to 5, indicating that the level of polymerization of the obtained superabsorbent polymer remained high with the addition of saturated organic acid.

However, compared to the surface-treated superabsorbent polymers of Comparative Preparation Examples 1 to 5 not adding saturated organic acid, Preparation Examples 1 to 8 with the addition of saturated organic acid could obtain surface-treated superabsorbent polymers with lower amounts of extractable contents, lower extractables and lower residual levels of the extractives with low molecular weights, indicating that the addition of saturated organic acid could stabilize the chemical structures during the polymerization, thereby ensuring the safety of the superabsorbent polymer while using as a foodstuff packaging material.

Moreover, there were no statistically significant differences between FSC, AAP, amounts of RAA, the amounts of extractable contents, the extractable, and the residual levels of the extractives with low molecular weights between the superabsorbent polymers with the addition of the same amount and type of saturated organic acid but different crosslinking agents, e.g., Preparation Example 1 vs Preparation Example 2, Preparation Example 4 vs Preparation Example 7, Preparation Example 3 vs Preparation Example 8, indicating that the types of the crosslinking agents did not adversely affect the absorptive capacity, the retention capability, the level of polymerization as well as the stability during the polymerization, and the antibacterial property.

In addition, the commercial superabsorbent polymers of Comparative Preparation Examples 4 and 5 and the superabsorbent polymer of the Preparation Examples 1 to 8 adding saturated organic acid had antibacterial properties, but the AAP of the Preparation Examples 1 to 8 were better, indicating better retention capabilities.

It can be known from the aforementioned embodiment that a superabsorbent polymer, a method of making the same, and a foodstuff packaging material including the same of the present invention have the advantages of the addition of saturated organic acid, the superabsorbent polymer can not only maintain the absorptive capacity and the retention capability, but also have a high level of polymerization and stability during the free radical polymerization, so that the superabsorbent polymer can have an antibacterial property, a low amount of extractable contents, a low extractable, and a low residual level of the extractives with low molecular weights, and can therefore be used as foodstuff packaging material.

## Claims

1. A superabsorbent polymer, **characterized by** comprising:
a water solution containing carboxyl group monomers, wherein a neutralization ratio of the water solution containing the carboxyl group monomers is bigger than or equal to 45 mole percent, and pH of the water solution containing the carboxyl group monomers is smaller than 7.0;
a saturated organic acid, having any one of a hydroxyl group and a halogen atom as well as at least two carboxylic acid group;
a crosslinking agent; and
a polymerization initiator, including a thermal decomposition initiator and/or a redox initiator.

2. The superabsorbent polymer of claim 1, **characterized in that** the saturated organic acid comprises a structure as shown in formula (1),
HOOC-R-COOH (1)
in formula (1), R has a structure as shown in formula (2) or formula (3), 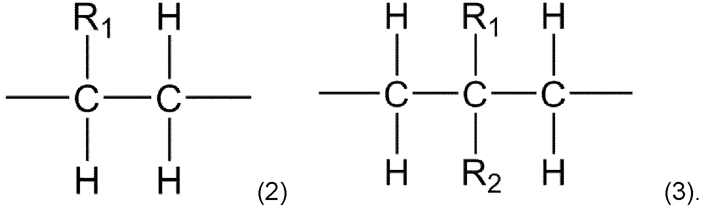 wherein R₁ represents a hydroxyl group or a halogen atom, and R₂ represents a carboxyl group.

3. The superabsorbent polymer of claims 1 or 2, **characterized in that** the saturated organic acid includes malic acid, 2-chlorobutanedioic acid, 2-bromobutanedioic acid, citric acid, 2-chloropropane-1,2,3-tricarboxylic acid, 2-bromopropane-1,2,3-tricarboxylic acid, and/or 2-fluoropropane-1,2,3-tricarboxylic acid.

4. The superabsorbent polymer of any one of claims 1-2, **characterized in that** a use amount of the saturated organic acid is 0.001 weight percent to 5.000 weight percent.

5. The superabsorbent polymer of any one of claims 1-4, **characterized by** further comprising a surface crosslinking agent on a surface of the superabsorbent polymer.

6. The superabsorbent polymer of claim 5, **characterized in that** based on the superabsorbent polymer as 100 parts by weight, a use amount of the surface crosslinking agent is 0.001 parts by weight to 10 parts by weight.

7. The superabsorbent polymer of claim 5, **characterized by** further comprising an aluminum sulfate water solution in a surface-treated superabsorbent polymer.

8. The superabsorbent polymer of any one of claims 1-5, **characterized in that** according to §21 177.1211 of Code of Federal Regulations Title (CFR) regulated by U.S. Food and Drug Administration (FDA), an extractable of the extractives with low molecular weights of a surface-treated superabsorbent polymer is smaller than or equal to 1.5 weight percent.

9. A foodstuff packaging material, **characterized by** comprising a superabsorbent polymer of claim 1.

10. A method of making a superabsorbent polymer, **characterized by** comprising:
performing a neutralizing step on a water solution containing carboxyl group monomers with a basic compound, so that a neutralization ratio of the water solution containing the carboxyl group monomers is bigger than or equal to 45 mole percent, wherein pH of the water solution containing the carboxyl group monomers is smaller than 7.0; and
mixing the water solution containing the carboxyl group monomers, a saturated organic acid, a crosslinking agent, and a polymerization initiator, and performing a free radical polymerization, so as to obtain the superabsorbent polymer.

11. The method of making the superabsorbent polymer of claim 10, **characterized in that** the saturated organic acid includes a structure as shown in formula (1),
HOOC-R-COOH (1)
wherein R has a structure as shown in formula (2) or formula (3), 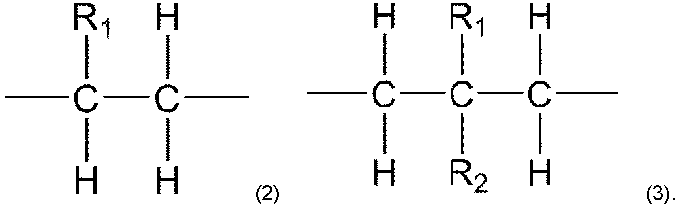
R₁ is a hydroxyl group or a halogen atom, and R₂ is a carboxyl group.

12. The method of making the superabsorbent polymer of claim 10, **characterized in that** the saturated organic acid comprises malic acid, 2-chlorobutanedioic acid, 2-bromobutanedioic acid, citric acid, 2-chloropropane-1,2,3-tricarboxylic acid, 2-bromopropane-1,2,3-tricarboxylic acid, and/or 2-fluoropropane-1,2,3-tricarboxylic acid.

13. The method of making the superabsorbent polymer of claim 10, **characterized in that** a use amount of the saturated organic acid is 0.001 weight percent to 5.000 weight percent.

14. The method of making the superabsorbent polymer of claim 10, further comprising performing a surface crosslinking treatment on the superabsorbent polymer, so as to obtain a surface-treated superabsorbent polymer.

15. The method of making the superabsorbent polymer of claim 10, further comprising:
adding an aluminum sulfate water solution to a surface-treated superabsorbent polymer; and
heat-treating the surface-treated superabsorbent polymer at 100°C to 200 °C for 0.5 to 1.5 hours.
